# EUROPEAN PATENT APPLICATION

(11) **EP 4 597 336 A1**
(43) Date of publication of application: **06.08.2025**
(21) Application number: 23870133.8
(22) Date of filing: 31.08.2023
(51) Int. Cl.: G06F 16/41, G06F 16/44, G06F 16/48

(54) **MULTIMEDIA WORK PROCESSING METHOD, APPARATUS AND DEVICE, AND STORAGE MEDIUM**

(30) Priority: 26.09.2022 CN 202211175908
(71) Applicant: Beijing Zitiao Network Technology Co., Ltd., Beijing 100190 (CN)
(72) Inventor: TANG, Yuxi, Beijing 100028 (CN); LI, Qian, Beijing 100028 (CN); ZENG, Zhizheng, Beijing 100028 (CN)
(74) Representative: Marks & Clerk LLP
(86) International application number: PCT/CN2023/116018
(87) International publication number: WO 2024/066893

(57) **Abstract**

The present disclosure provides a multimedia work processing method, apparatus and device, and a storage medium. The method comprises: displaying favorites to be created corresponding to a first content tag; and when a preset creation operation for said favorites is received, creating target favorites on the basis of a multimedia work having the first content tag in a multimedia work favorites collection. Hence, in embodiments of the present disclosure, by displaying said favorites corresponding to the first content tag, the function of favorite intelligent recommendation is realized, so that a user can create the target favorites by triggering the preset creation operation for said favorites, thereby improving the convenience of favorites creation, enriching the interaction functions related to multimedia works, and improving user experience.

## Description

This application claims priority to Chinese Patent Application No. 202211175908.7, filed on September 26, 2022, the entire disclosure of which is incorporated herein by reference as part of the present disclosure.

### TECHNICAL FIELD

The present disclosure relates to a multimedia work processing method, apparatus and device, and a storage medium.

### BACKGROUND

With the continuous development of the multimedia technology, interactive functions related to multimedia works have attracted increasing attention.

Therefore, how to enrich the interactive functions related to multimedia works to enhance the use experience of a user is an urgent technical problem needing to be solved at present.

### SUMMARY

In order to solve the above technical problem, the present disclosure provides a multimedia work processing method, apparatus and device, and a storage medium, which can enrich interactive functions related to multimedia works and enhance the user experience.

On the first aspect, the present disclosure provides a multimedia work processing method, comprising: displaying favorites to be created corresponding to a first content label; and creating target favorites based on a multimedia work having the first content label in a multimedia work favorites collection in response to a preset creation operation for the favorites to be created, wherein the multimedia work favorites collection comprises a multimedia work favorited by a current user; and the target favorites comprises at least one multimedia work having the first content label in the multimedia work favorites collection.

In an optional implementation, the displaying favorites to be created corresponding to a first content label comprises: displaying the favorites to be created corresponding to the first content label in response to determining a count of multimedia works having the first content label in the multimedia work favorites collection to be not less than a preset threshold.

In an optional implementation, before the displaying the favorites to be created corresponding to the first content label in response to determining a count of multimedia works having the first content label in the multimedia work favorites collection to be not less than a preset threshold, the method further comprises: acquiring a count of multimedia works having a same content label in the multimedia work favorites collection in response to a triggering operation for a favorites control on a user personal homepage, and determining whether the count of multimedia works having the same content label is less than the preset threshold; and correspondingly, the displaying the favorites to be created corresponding to the first content label in response to determining a count of multimedia works having the first content label in the multimedia work favorites collection to be not less than a preset threshold comprises: displaying the favorites to be created corresponding to the first content label within a favorites display area of the user personal homepage in response to determining the count of multimedia works having the first content label in the multimedia work favorites collection to be not less than the preset threshold.

In an optional implementation, the creating target favorites based on a multimedia work having the first content label in a multimedia work favorites collection in response to a preset creation operation for the favorites to be created comprises: showing a cover of the multimedia work having the first content label in the multimedia work favorites collection in response to the preset creation operation for the favorites to be created; and creating the target favorites based on a selecting operation for the at least one multimedia work having the first content label, and adding the at least one multimedia work having the first content label to the target favorites.

In an optional implementation, the displaying the favorites to be created corresponding to the first content label in response to determining a count of multimedia works having the first content label in the multimedia work favorites collection to be not less than a preset threshold comprises: displaying the favorites to be created corresponding to the first content label in a form of a bottom prompt bar on a user personal homepage in response to determining the count of multimedia works having the first content label in the multimedia work favorites collection to be not less than the preset threshold.

In an optional implementation, the method further comprises: determining whether created favorites exists for the current user in response to a triggering operation for a favorites control on a video playing page; and showing a preset favoriting dynamic effect, and displaying an entry of adding to favorites in a form of a bottom prompt bar on the video playing page in response to determining the created favorites to exist for the current user, wherein the preset favoriting dynamic effect is used to prompt that a multimedia work which is being shown on the video playing page has been added to the multimedia work favorites collection, and the entry of adding to favorites is used to trigger adding the multimedia work which is being shown on the video playing page to the created favorites.

In an optional implementation, the method further comprises: in response to a triggering operation for a personal homepage control on the video playing page, displaying covers of multimedia works in the multimedia work favorites collection on the user personal homepage, and displaying a preset favoriting mark on a cover of a multimedia work meeting a preset condition, wherein the multimedia work meeting the preset condition comprises a multimedia work favorited in a preset time period; and the preset favoriting mark is used to reflect favoriting time information of a corresponding multimedia work.

In an optional implementation, the method further comprises: displaying a first viewing entry for a first multimedia work collection in response to determining the first multimedia work collection to have an update, wherein the first multimedia work collection is a multimedia work collection in a favorited state; and displaying the first multimedia work collection in response to a triggering operation for the first viewing entry.

In an optional implementation, the method further comprises: displaying a second viewing entry for a first multimedia resource in response to determining the first multimedia resource to meet a preset prompt condition, wherein the first multimedia resource is a multimedia resource in the favorited state; and displaying the first multimedia resource in response to a triggering operation for the second viewing entry.

On the second aspect, the present disclosure further provides a multimedia work processing apparatus, comprising: a first display module configured to display favorites to be created corresponding to a first content label; and a creation module configured to create target favorites based on a multimedia work having the first content label in a multimedia work favorites collection in response to a preset creation operation for the favorites to be created, wherein the multimedia work favorites collection comprises a multimedia work favorited by a current user; and the target favorites comprises at least one multimedia work having the first content label in the multimedia work favorites collection.

On the third aspect, the present disclosure provides a computer-readable storage medium, storing instructions which, when run on a terminal device, cause the terminal device to implement the above method.

On the fourth aspect, the present disclosure provides a multimedia work processing device, comprising a memory, a processor, and a computer program stored on the memory and runnable on the processor, wherein the processor, when executing the computer program, implements the above method.

On the fifth aspect, the present disclosure provides a computer program product, comprising a computer program/instructions, wherein the computer program/instructions, when executed by a processor, causes/cause the above method.

### BRIEF DESCRIPTION OF DRAWINGS

The accompanying drawings incorporated into the specification and constituting part of the specification illustrate the examples of the present disclosure, and serve, together with the specification, to explain the principles of the present disclosure.

In order to describe embodiments of the present disclosure more clearly, the accompanying drawings required for describing the embodiments will be described briefly below. Apparently, other accompanying drawings can also be derived from these drawings by those of ordinary skill in the art without creative efforts.
Fig. 1 is a flowchart of a multimedia work processing method provided by an embodiment of the present disclosure;
Fig. 2 is a schematic diagram of a user personal homepage provided by an embodiment of the present disclosure;
Fig. 3 is a schematic diagram of another user personal homepage provided by an embodiment of the present disclosure;
Fig. 4 is a schematic diagram of a cover showing page of a multimedia work provided by an embodiment of the present disclosure;
Fig. 5 is a flowchart of another multimedia work processing method provided by an embodiment of the present disclosure;
Fig. 6 is a schematic diagram of yet another user personal homepage provided by an embodiment of the present disclosure;
Fig. 7 is a schematic diagram of a video playing page provided by an embodiment of the present disclosure;
Fig. 8 is a structural schematic diagram of an apparatus for processing a multimedia work provided by an embodiment of the present disclosure; and
Fig. 9 is a structural schematic diagram of a device for processing a multimedia work provided by an embodiment of the present disclosure.

### DETAILED DESCRIPTION

In order to provide a clearer understanding of the objectives, features and advantages of the present disclosure, the solutions in the present disclosure will be further described below. It should be noted that the embodiments in the present disclosure and features in the embodiments may be combined with one another without conflict.

Many specific details are described below to help fully understand the present disclosure. However, the present disclosure may also be implemented in other manners different from those described herein. Apparently, the described examples are merely some rather than all of the examples of the present disclosure.

At present, in a process when a user browses multimedia works, the user can favorite a multimedia work by operations such as clicking on a favorites control. Since favoriting a multimedia work is a quickly marking behavior, with the number of multimedia works browsed increasing, the number of multimedia works collected by the user has accumulated, the types have become more and more chaotic, and it is difficult for the user to effectively re-access the favorited multimedia works, losing the meaning of the multimedia work favoriting function.

Creating favorites (collection) is one of ways of organizing multimedia works favorited by the user. The user can actively create favorites and manually select a multimedia work needing to be added to the favorites, realizing the creation function for favorites. However, in the process of actively creating favorites, the user needs to select a multimedia work needing to be added to the favorites from a large number of favorited multimedia works. For the user, the creation cost of the favorites is high, and the value and role of the favorites cannot be brought into full play.

To this end, an embodiment of the present disclosure provides a multimedia work processing method. Firstly, favorites to be created corresponding to a first content label is displayed. Target favorites is then created based on a multimedia work having the first content label in a multimedia work favorites collection upon receiving a preset creation operation for the favorites to be created. As can be seen, the embodiments of the present disclosure realize the function of intelligent recommendation of favorites by displaying the favorites to be created corresponding to the first content label so that the user can realize the creation of the target favorites by triggering the preset creation operation for the favorites to be created. The convenience of creating favorites is improved and interactive functions related to multimedia works are enriched, thereby enhancing the use experience of the user.

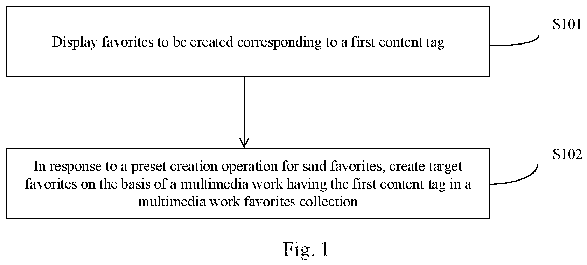

On this basis, an embodiment of the present disclosure provides a multimedia work processing method. With reference to Fig. 1, there is shown a flowchart of a multimedia work processing method provided by an embodiment of the present disclosure. The method includes:

S101: displaying favorites to be created corresponding to a first content label.

In an embodiment of the present disclosure, each multimedia work may have one or more content label, and the content label is used to identify a content type of the multimedia work. For example, a travel type multimedia work may have a travel content label, and a pet type multimedia work may have a pet content label, etc.

In practical use, in order to facilitate a re-access to a favorited particular content type of multimedia work by a user, favorites may be created for the content type of multimedia work.

In an optional implementation, the first content label may be determined based on a preset recommendation strategy. Specifically, the first content label may be a content label determined based on a current top search and the like.

In another optional implementation, when multimedia works that have been favorited by the user include a large number of multimedia works having a same content label, the user may be recommended to create favorites for the content label so as to add the multimedia works having the content label to the same favorites, facilitating a re-access to the multimedia works of the content type by the user.

In an embodiment of the present disclosure, for the multimedia works in the multimedia work favorites collection of the current user, the count of the multimedia works having the same content label is counted, and the content label for the multimedia works which have a count of less than a preset threshold is determined. The user is then recommended to create favorites for the content label. The preset threshold may be determined based on a requirement, which may be, for example, 5.

In an embodiment of the present disclosure, the favorites to be created corresponding to the first content label is displayed if the count of multimedia works having the first content label in the multimedia work favorites collection is determined to be not less than the preset threshold. The first content label may be any content label.

In an optional implementation, the count of multimedia works having the same content label in the multimedia work favorites collection is acquired in response to a triggering operation for a favorites control on a user personal homepage, and whether the count of multimedia works having the same content label is less than the preset threshold is determined. The favorites to be created corresponding to the first content label is displayed within a favorites display area of the user personal homepage in response to determining the count of multimedia works having the first content label in the multimedia work favorites collection to be not less than the preset threshold.

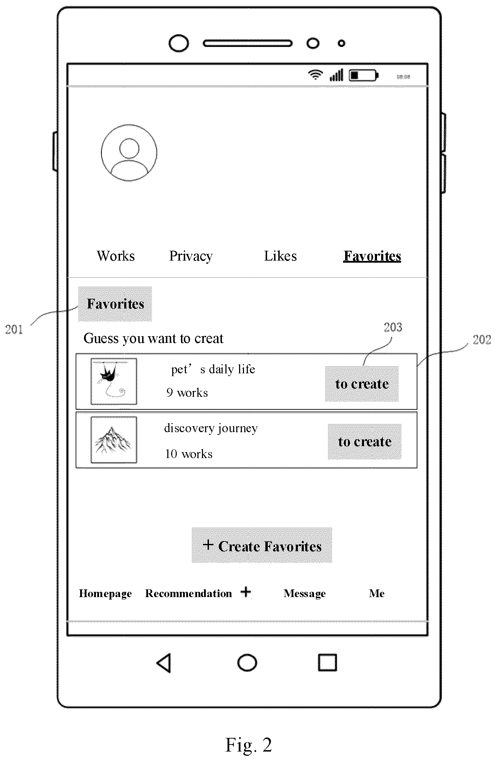

With reference to Fig. 2, there is shown a schematic diagram of a user personal homepage provided by an embodiment of the present disclosure, wherein a favorites control 201 is displayed under a favorites tab of the user personal homepage. Upon receiving a clicking operation for the favorites control 201, a count of multimedia works having a same content label among multimedia works displayed under the favorites tab is acquired. If the count of the multimedia works having the first content label is determined to be not less than the preset threshold, the favorites 202 to be created corresponding to the first content label is displayed on a display interface under the favorites control 201. If the first content label is a pet content label, the favorites 202 to be created corresponding to the pet content label is displayed on the display interface under the favorites control 201.

A favorites name corresponding to the first content label, e.g., "pet's daily life", may be displayed within a display area of the favorites to be created. The count of the multimedia works having the first content label in the multimedia work favorites collection may also be displayed, e.g., "9 works". A "to create" control 203 may also be provided for triggering a creation operation of favorites corresponding to the first content label.

In an embodiment of the present disclosure, a plurality of pieces of favorites to be created may be displayed on the display interface under the favorites control 201, e.g., favorites 203 to be created corresponding to the travel content label as shown in Fig. 2.

In an optional implementation, a count of pieces of favorites to be created that can be displayed on the display interface under the favorites control 201 may be limited. For example, it is determined that 3 pieces of favorites to be created are displayed at most on the display interface under the favorites control 201. If there are more than 3 content labels meeting a condition, the favorites to be created corresponding to the top 3 content labels for which the multimedia works are the most may be displayed preferentially.

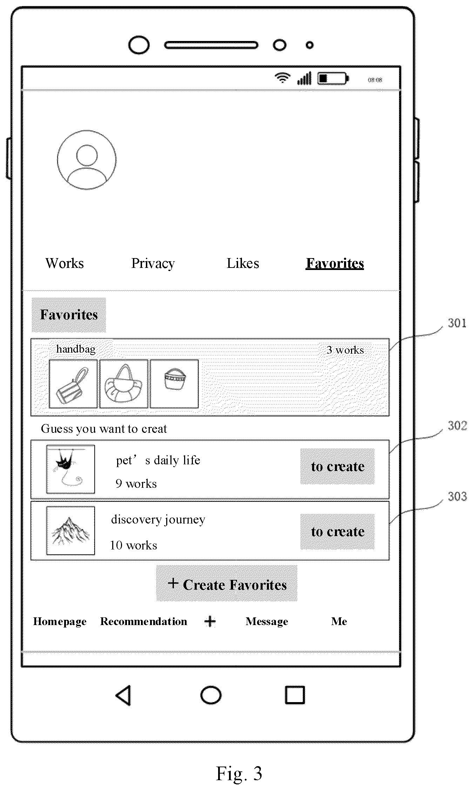

In an optional implementation, if created favorites exists for the current user, the favorites that has been created by the current user and the favorites to be created corresponding to the first content label are displayed on a display interface under the favorites control of the user personal homepage. As shown in Fig. 3, there is shown a schematic diagram of another user personal homepage provided by an embodiment of the present disclosure, wherein favorites 301 that has been created by the current user, favorites 302 to be created corresponding to the pet content label, and favorites 303 to be created corresponding to the travel content label are displayed on the display interface under the favorites control.

S102: creating target favorites based on a multimedia work having the first content label in the multimedia work favorites collection in response to a preset creation operation for the favorites to be created.

The multimedia work favorites collection includes a multimedia work favorited by the current user; and the target favorites includes at least one multimedia work having the first content label in the multimedia work favorites collection.

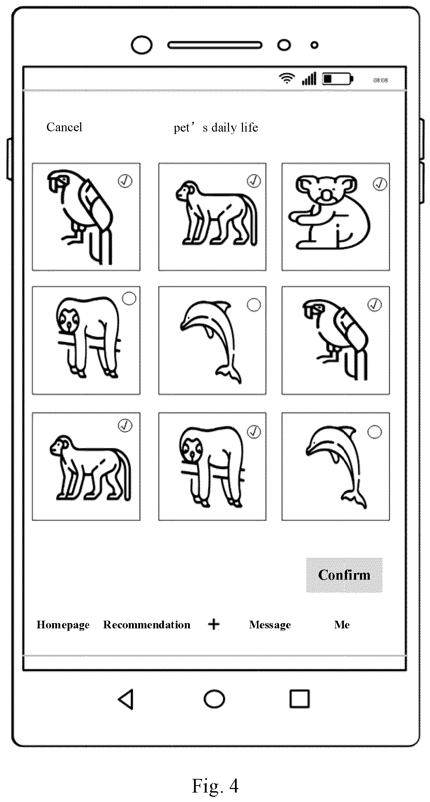

In an embodiment of the present disclosure, upon receiving the preset creation operation for the favorites to be created corresponding to the first content label, the target favorites is created, and the multimedia work having the first content label in the multimedia work favorites collection is determined, and a cover of the multimedia work having the first content label is shown. As shown in Fig. 4, there is shown a schematic diagram of a cover showing page of a multimedia work provided by an embodiment of the present disclosure, wherein a multimedia work having the first content label that has been favorited by the current user is shown on the cover showing page of the multimedia work, e.g., a cover of a multimedia work having the pet content label shown in Fig. 4.

In practical use, the user may select at least one multimedia work from multimedia works shown on the cover showing page of the multimedia works and add the selected multimedia work to the target favorites. The target favorites includes at least one multimedia work having the first content label selected from the multimedia work favorites collection.

In the multimedia work processing method provided by the embodiments of the present disclosure, firstly, the favorites to be created corresponding to the first content label is displayed, and the target favorites is then created based on the multimedia work having the first content label in the multimedia work favorites collection upon receiving the preset creation operation for the favorites to be created. As can be seen, the embodiments of the present disclosure realize the function of intelligent recommendation of favorites by displaying the favorites to be created corresponding to the first content label so that the user can realize the creation of the target favorites by triggering the preset creation operation for the favorites to be created. The convenience of creating favorites is improved and interactive functions related to multimedia works are enriched, thereby enhancing the use experience of the user.

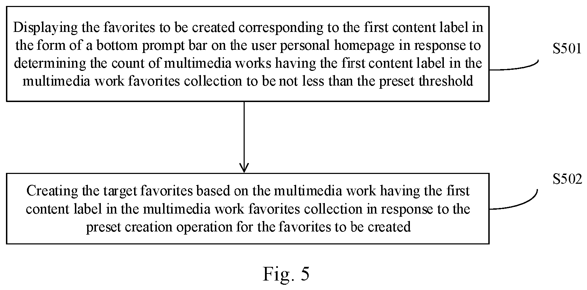

On the basis of the above embodiments, an embodiment of the present disclosure further provides a multimedia work processing method. With reference to Fig. 5, there is shown a flowchart of another multimedia work processing method provided by an embodiment of the present disclosure. The method includes:

S501: displaying the favorites to be created corresponding to the first content label in the form of a bottom prompt bar on the user personal homepage in response to determining the count of multimedia works having the first content label in the multimedia work favorites collection to be not less than the preset threshold.

The multimedia work favorites collection includes a multimedia work favorited by the current user.

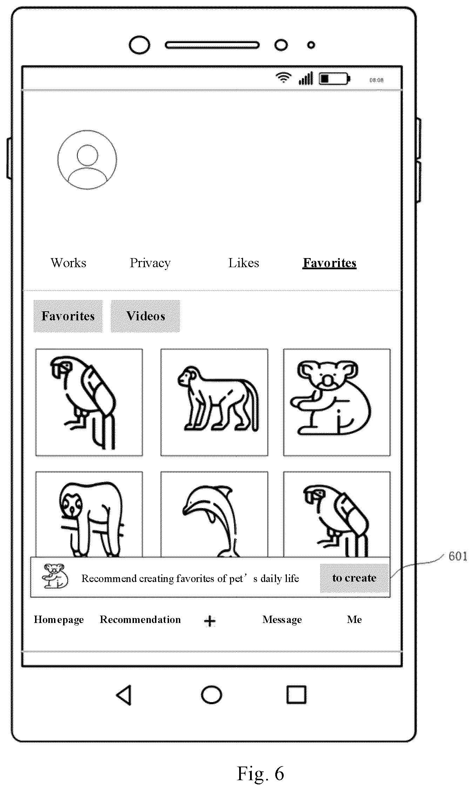

**In** an embodiment of the present disclosure, upon determining that the count of multimedia works having the first content label in the multimedia work favorites collection is not less than the preset threshold, the favorites to be created is recommended to the user in the form of the bottom prompt bar. As shown in Fig. 6, there is shown a schematic diagram of yet another user personal homepage provided by an embodiment of the present disclosure. Favorites 601 to be created corresponding to the first content label is displayed in the form of the bottom prompt bar on the user personal homepage. A "to create" control is disposed within the display area of the favorites 601 to be created to trigger creating favorites for the first content label.

In an optional implementation, favorites to be created respectively corresponding to one or more content labels is displayed in the form of the bottom prompt bar on the user personal homepage to provide a convenient entry of creating favorites for the user.

In an optional implementation, if the count of multimedia works having the first content labels in the multimedia work favorites collection is determined to be not less than the preset threshold, the favorites to be created corresponding to the first content label is displayed in the form of the bottom prompt bar on the user personal homepage, and the favorites to be created corresponding to the first content label is displayed within a favorites display area. The user displays the favorites to be created or the favorites to be created within the favorites display area in the form of the bottom prompt bar and can realize the creation of the target favorites. The convenience of creating favorites is improved.

S502: creating the target favorites based on the multimedia work having the first content label in the multimedia work favorites collection in response to the preset creation operation for the favorites to be created.

The target favorites includes at least one multimedia work having the first content label in the multimedia work favorites collection.

In an embodiment of the present disclosure, by clicking on the "to create" control as shown in Fig. 6, the user can trigger a creation operation for favorites of the content label corresponding to the "to create" control to create the target favorites, and select multimedia works added to the target favorites based on the multimedia works having the content label in the multimedia work favorites collection, thereby completing the creation of the target favorites.

S502 in the embodiment of the present disclosure may be understood based on the description of S202 in the above embodiment, which will not be repeated here.

In the multimedia work processing method provided by the embodiments of the present disclosure, the favorites to be created is displayed in the form of the bottom prompt bar on the user personal homepage to provide the convenient entry of creating favorites for the user. The interactive functions related to multimedia works are enriched, thereby enhancing the use experience of the user.

On the basis of the above embodiments, an embodiment of the present disclosure further provides a multimedia work processing method. Specifically, in a video playing process, if a triggering operation for a favorites control on a video playing page is received, whether created favorites exists for the current user is first determined. If it is determined that the created favorites exists for the current user, a preset favoriting dynamic effect is shown, and an entry of adding to favorites is displayed in the form of a bottom prompt bar on the video playing page. Adding a multimedia work which is being shown on the video playing page to the favorites that has been created by the current user may be triggered through the entry of adding to favorites.

In an optional implementation, if it is determined that the created favorites exists for the current user, the preset favoriting dynamic effect may be shown, it is prompted that the multimedia work which is being shown on the video playing page has been favorited.

The preset favoriting dynamic effect is used to prompt that the multimedia work which is being shown on the video playing page has been added to the multimedia work favorites collection, i.e., prompt that the current user has favorited the multimedia work which is being shown currently.

In an optional implementation, showing the preset favoriting dynamic effect may include: displaying a thumbnail of a picture which is shown on the video playing page is displayed at a personal homepage control on the video playing page. Thus, the current user may be prompted to view a favorited multimedia work by clicking on the personal homepage control.

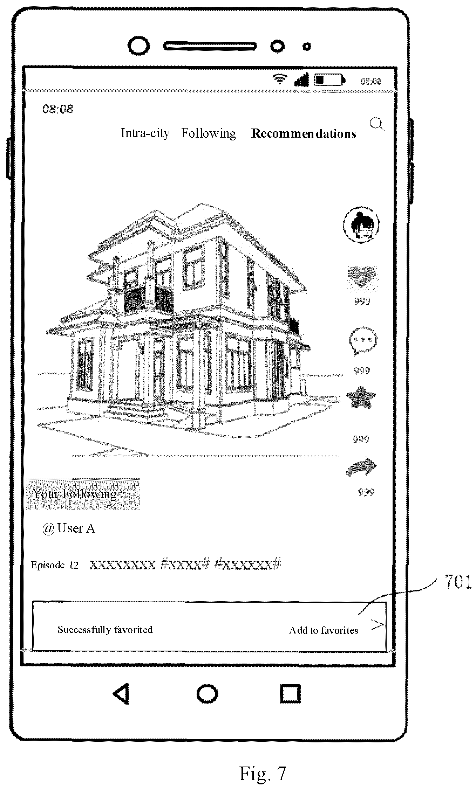

After the preset favoriting dynamic effect shown on the video playing page is hidden, the entry of adding to favorites may also be displayed in the form of the bottom prompt bar on the video playing page. As shown in Fig. 7, there is shown a schematic diagram of a video playing page provided by an embodiment of the present disclosure, wherein the entry 701 of adding to favorites is displayed in the form of the bottom prompt bar on the video playing page.

Upon receiving a triggering operation for the entry 701 of adding to favorites, favorites that has been created by the current user is shown on the video playing page. By selecting any favorites, the user can realize the function of adding the multimedia work which is being shown on the video playing page to the favorites. In this way, the function of adding a multimedia work to the created favorites can be efficiently realized, and the use experience of the user can be enhanced.

In another optional implementation, within a preset time after favoriting a multimedia work, if an operation of displaying the user personal homepage is triggered, a preset favoriting mark may be displayed on a cover of the latest favorited multimedia work while covers of the multimedia works in the multimedia work favorites collection are displayed on the user personal homepage.

Specifically, in response to the triggering operation on the personal homepage control on the video playing page, the covers of the multimedia works in the multimedia work favorites collection are displayed on the user personal homepage, and the preset favoriting mark is displayed on the cover of a multimedia work meeting a preset condition, wherein the multimedia work meeting the preset condition includes a multimedia work favorited in a preset time period, e.g., a multimedia work favorited within the latest 1 minute. The preset favoriting mark is used to reflect favoriting time information of the corresponding multimedia work. For example, the preset favoriting mark may be text information such as "just favorited".

In the multimedia work processing method provided by the embodiments of the present disclosure, when the user triggers favoriting the currently shown multimedia work, the entry of adding to favorites is displayed in the form of the bottom prompt bar on the video playing page. Thus, a shortcut entry of adding a multimedia work to created favorites is provided for the user. As can be seen, the embodiments of the present disclosure can improve the efficiency of adding multimedia works to the created favorites by the user and enhance the use experience of the user.

On the basis of the above embodiments, a content update prompt function can be supported for a multimedia work collection that has been favorited by the current user. The multimedia work collection may include a video collection, a picture collection, a short drama collection, and the like. Specifically, if it is determined that any multimedia work collection has an update, a first viewing entry may be displayed for the multimedia work collection. An update content of the multimedia work collection may be located and shown through the first viewing entry so that the user can conveniently view the favorited multimedia work collection having an update.

In practical use, upon receiving a showing triggering operation for the user personal homepage, whether the multimedia work collection favorited by the current user has an update is determined. For example, any one or more multimedia works are added or modified in the multimedia work collection. If it is determined that a first multimedia work collection has an update, the first viewing entry is displayed for the first multimedia work collection. Specifically, the first viewing entry may be displayed for the first multimedia work collection in the form of the bottom prompt bar on the user personal homepage. Upon receiving a triggering operation for the first viewing entry, the first multimedia work collection is displayed.

In an embodiment of the present disclosure, the user can locate and show a multimedia work collection in a favorited state having an update by triggering the first viewing entry so that the user can conveniently view the favorited multimedia work collection having an update.

In addition, the embodiments of the present disclosure can also support a new prompt function for a multimedia resource that has been favorited by the current user. The multimedia resource may include a place (such as a scenic spot, a restaurant, and a park), an object link, a video editing tool, etc.

In an optional implementation, if it is determined that a first multimedia resource meets a preset prompt condition, a second viewing entry may be displayed for the first multimedia resource, and the first multimedia resource is displayed upon receiving a triggering operation for the second viewing entry.

The preset prompt condition may include having a content update, approaching a period of validity, and the like.

For example, when it is determined that a period of validity of a group purchase object corresponding to a certain object link favorited by the current user approaches, the second viewing entry may be displayed for the group purchase object corresponding to the object link in the form of the bottom prompt bar on the user personal homepage. The user can view the group purchase object corresponding to the object link through the second viewing entry.

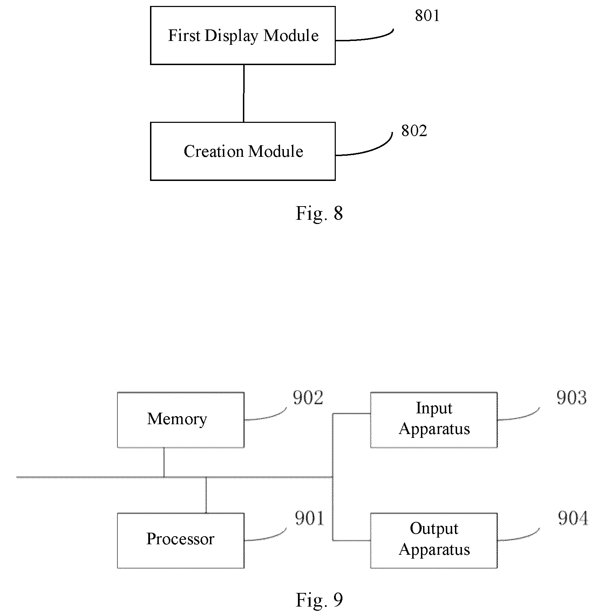

Based on the above method embodiments, the present disclosure further provides an apparatus for processing a multimedia work. With reference to Fig. 8, there is shown a structural schematic diagram of a multimedia work processing apparatus provided by an embodiment of the present disclosure. The apparatus includes: a first display module 801 configured to display favorites to be created corresponding to a first content label; and a creation module 802 configured to create target favorites based on a multimedia work having the first content label in a multimedia work favorites collection in response to a preset creation operation for the favorites to be created, wherein the multimedia work favorites collection includes a multimedia work favorited by a current user; and the target favorites includes at least one multimedia work having the first content label in the multimedia work favorites collection.

**In** an optional implementation, the first display module is specifically configured to: display the favorites to be created corresponding to the first content label in response to determining a count of multimedia works having the first content label in the multimedia work favorites collection to be not less than a preset threshold.

In an optional implementation, the apparatus further includes: a first acquisition module configured to acquire a count of multimedia works having a same content label in the multimedia work favorites collection in response to a triggering operation for a favorites control on a user personal homepage, and determine whether the count of multimedia works having the same content label is less than the preset threshold.

Correspondingly, the first display module is specifically configured to: display the favorites to be created corresponding to the first content label within a favorites display area of the user personal homepage if the count of multimedia works having the first content label in the multimedia work favorites collection is not less than the preset threshold.

In an optional implementation, the creation module includes: a first showing submodule configured to show a cover of the multimedia work having the first content label in the multimedia work favorites collection in response to the preset creation operation for the favorites to be created; and a creation submodule configured to create the target favorites based on a selecting operation for at least one multimedia work having the first content label, and add the at least one multimedia work having the first content label to the target favorites.

In an optional implementation, the first display module is specifically configured to: display the favorites to be created corresponding to the first content label in the form of a bottom prompt bar on the user personal homepage if the count of multimedia works having the first content label in the multimedia work favorites collection is determined to be not less than the preset threshold.

In an optional implementation, the apparatus further includes: a determination module configured to determine whether created favorites exists for the current user in response to a triggering operation for a favorites control on a video playing page; and a showing module configured to, show a preset favoriting dynamic effect, and display an entry of adding to favorites in the form of a bottom prompt bar on the video playing page in response to determining that the created favorites exists the current user, wherein the preset favoriting dynamic effect is used to prompt that a multimedia work which is being shown on the video playing page has been added to the multimedia work favorites collection, and the entry of adding to favorites is used to trigger adding the multimedia work which is being shown on the video playing page to the created favorites.

In an optional implementation, the apparatus further includes: a second display module configured to, in response to a triggering operation for a personal homepage control on the video playing page, display covers of multimedia works in the multimedia work favorites collection on the user personal homepage, and display a preset favoriting mark on the cover of a multimedia work meeting a preset condition, wherein the multimedia work meeting the preset condition includes a multimedia work favorited in a preset time period; and the preset favoriting mark is used to reflect favoriting time information of the corresponding multimedia work.

In an optional implementation, the apparatus further includes: a third display module configured to display a first viewing entry for the first multimedia work collection in response to determining that a first multimedia work collection has an update, wherein the first multimedia work collection is a multimedia work collection in a favorited state; and a fourth display module configured to display the first multimedia work collection in response to a triggering operation for the first viewing entry.

In an optional implementation, the apparatus further includes: a fifth display module configured to display a second viewing entry for the first multimedia resource, wherein the first multimedia resource is a multimedia resource in the favorited state in response to determining that a first multimedia resource meets a preset prompt condition; and a sixth display module configured to display the first multimedia resource in response to a triggering operation for the second viewing entry.

In the apparatus for processing a multimedia work provided in the embodiment of the present disclosure, firstly, the favorites to be created corresponding to the first content label is displayed. The target favorites is then created based on the multimedia work having the first content label in the multimedia work favorites collection upon receiving the preset creation operation for the favorites to be created. As can be seen, the embodiments of the present disclosure realize the function of intelligent recommendation of favorites by displaying the favorites to be created corresponding to the first content label so that the user can realize the creation of the target favorites by triggering the preset creation operation for the favorites to be created. The convenience of creating favorites is improved and interactive functions related to multimedia works are enriched, thereby enhancing the use experience of the user.

In addition to the above method and apparatus, an embodiment of the present disclosure further provides a computer-readable storage medium, storing instructions which, when run on a terminal device, cause the terminal device to implement the multimedia work processing method in the embodiments of the present disclosure.

An embodiment of the present disclosure further provides a computer program product, including a computer program/instructions which, when executed by a processor, causes/cause the multimedia work processing method described in the embodiments of the present disclosure to be implemented.

In addition, an embodiment of the present disclosure further provides a device for processing a multimedia work, as shown in Fig. 9, which may include: a processor 901, a memory 902, an input apparatus 903, and an output apparatus 904. The count of processors 901 in the device for processing a multimedia work may be one or more. One processor is shown in Fig. 9 for example. In some embodiments of the present disclosure, the processor 901, the memory 902, the input apparatus 903, and the output apparatus 904 may be connected by a bus or in other manners, wherein connection by the bus is shown in Fig. 9 for example.

The memory 902 may be configured to store software programs and modules. The processor 901 executes various functional applications and data processing of the device for processing a multimedia work by running the software programs and the modules stored on the memory 902. The memory 902 may mainly include a program storage area and a data storage area, where the program storage area may store an operating system, an application required by at least one function, etc. Moreover, the memory 902 may include a high-speed random access memory, and may also include a non-volatile memory, for example, at least one magnetic disk storage device, a flash memory device, or other volatile solid storage device. The input apparatus 903 may be configured to receive input digit or character information and generate signal inputs related to user settings and function control of the device for processing a multimedia work.

Specifically, in this embodiment, the processor 901 may load executable files corresponding to processes of one or more applications to the memory 902 according to instructions, and the processor 901 may run the applications stored on the memory 902, thereby realizing various functions of the device for processing a multimedia work.

An embodiment of the present disclosure further provides a computer program product, including a computer program/instructions which, when executed by a processor, cause/causes the multimedia work processing method described in the embodiments of the present disclosure to be implemented.

It should be noted that relational terms herein such as "first" and "second" are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device. Without more restrictions, the elements defined by the sentence "including a ..." do not exclude the existence of other identical elements in the process, method, article, or device including the elements.

The foregoing are descriptions of specific embodiments of the present disclosure, allowing a person skilled in the art to understand or implement the present disclosure. A plurality of amendments to are apparent to those skilled in the art, and general principles defined herein can be achieved in the other examples without departing from the spirit or scope of the present disclosure. Thus, the present disclosure will not be limited to these examples shown herein, but shall accord with the widest scope consistent with the principles and novel characteristics disclosed herein.

## Claims

1. A multimedia work processing method, comprising:
displaying favorites to be created corresponding to a first content label; and
creating target favorites based on a multimedia work having the first content label in a multimedia work favorites collection in response to a preset creation operation for the favorites to be created, wherein the multimedia work favorites collection comprises a multimedia work favorited by a current user; and the target favorites comprises at least one multimedia work having the first content label in the multimedia work favorites collection.

2. The method according to claim 1, wherein the displaying favorites to be created corresponding to a first content label comprises:
displaying the favorites to be created corresponding to the first content label in response to determining a count of multimedia works having the first content label in the multimedia work favorites collection to be not less than a preset threshold.

3. The method according to claim 2, before the displaying the favorites to be created corresponding to the first content label in response to determining a count of multimedia works having the first content label in the multimedia work favorites collection to be not less than a preset threshold, further comprising:
acquiring a count of multimedia works having a same content label in the multimedia work favorites collection in response to a triggering operation for a favorites control on a user personal homepage, and determining whether the count of multimedia works having the same content label is less than the preset threshold; and
correspondingly, the displaying the favorites to be created corresponding to the first content label in response to determining a count of multimedia works having the first content label in the multimedia work favorites collection to be not less than a preset threshold comprises:
displaying the favorites to be created corresponding to the first content label within a favorites display area of the user personal homepage in response to determining the count of multimedia works having the first content label in the multimedia work favorites collection to be not less than the preset threshold.

4. The method according to any one of claims 1 to 3, wherein the creating target favorites based on a multimedia work having the first content label in a multimedia work favorites collection in response to a preset creation operation for the favorites to be created comprises:
showing a cover of the multimedia work having the first content label in the multimedia work favorites collection in response to the preset creation operation for the favorites to be created; and
creating the target favorites based on a selecting operation for the at least one multimedia work having the first content label, and adding the at least one multimedia work having the first content label to the target favorites.

5. The method according to claim 2, wherein the displaying the favorites to be created corresponding to the first content label in response to determining a count of multimedia works having the first content label in the multimedia work favorites collection to be not less than a preset threshold comprises:
displaying the favorites to be created corresponding to the first content label in a form of a bottom prompt bar on a user personal homepage in response to determining the count of multimedia works having the first content label in the multimedia work favorites collection to be not less than the preset threshold.

6. The method according to any one of claims 1 to 5, further comprising:
determining whether created favorites exists for the current user in response to a triggering operation for a favorites control on a video playing page; and
showing a preset favoriting dynamic effect, and displaying an entry of adding to favorites in a form of a bottom prompt bar on the video playing page in response to determining the created favorites to exist for the current user, wherein the preset favoriting dynamic effect is used to prompt that a multimedia work which is being shown on the video playing page has been added to the multimedia work favorites collection, and the entry of adding to favorites is used to trigger adding the multimedia work which is being shown on the video playing page to the created favorites.

7. The method according to claim 6, further comprising:
in response to a triggering operation for a personal homepage control on the video playing page, displaying covers of multimedia works in the multimedia work favorites collection on the user personal homepage, and displaying a preset favoriting mark on a cover of a multimedia work meeting a preset condition, wherein the multimedia work meeting the preset condition comprises a multimedia work favorited in a preset time period; and the preset favoriting mark is used to reflect favoriting time information of a corresponding multimedia work.

8. The method according to any one of claims 1 to 7, further comprising:
displaying a first viewing entry for a first multimedia work collection in response to determining the first multimedia work collection to have an update, wherein the first multimedia work collection is a multimedia work collection in a favorited state; and
displaying the first multimedia work collection in response to a triggering operation for the first viewing entry.

9. The method according to any one of claims 1 to 8, further comprising:
displaying a second viewing entry for a first multimedia resource in response to determining the first multimedia resource to meet a preset prompt condition, wherein the first multimedia resource is a multimedia resource in the favorited state; and
displaying the first multimedia resource in response to a triggering operation for the second viewing entry.

10. A multimedia work processing apparatus, comprising:
a first display module configured to display favorites to be created corresponding to a first content label; and
a creation module configured to create target favorites based on a multimedia work having the first content label in a multimedia work favorites collection in response to a preset creation operation for the favorites to be created, wherein the multimedia work favorites collection comprises a multimedia work favorited by a current user; and the target favorites comprises at least one multimedia work having the first content label in the multimedia work favorites collection.

11. A computer-readable storage medium, storing instructions which, when run on a terminal device, cause the terminal device to implement the method according to any one of claims 1 to 9.

12. A multimedia work processing device, comprising a memory, a processor, and a computer program stored on the memory and runnable on the processor, wherein the processor, when executing the computer program, implements the method according to any one of claims 1 to 9.

13. A computer program product, comprising a computer program/instructions, wherein the computer program/instructions, when executed by a processor, causes/cause the method according to any one of claims 1 to 9 to be implemented.
